**Europäisches Patentamt**

**European Patent Office**

**Office européen des brevets**

(11) Veröffentlichungsnummer: **0 190 571**
**A2**

## (12) EUROPÄISCHE PATENTANMELDUNG

(21) Anmeldenummer: **86100447.1**

(22) Anmeldetag: **15.01.86**

(51) Int. Cl.⁴: **F 16 D 13/52**

(30) Priorität: **04.02.85 DE 3503659**
**14.09.85 DE 3532939**

(43) Veröffentlichungstag der Anmeldung:
**13.08.86 Patentblatt 86/33**

(84) Benannte Vertragsstaaten:
**AT BE CH DE FR GB IT LI SE**

(71) Anmelder: **Ortlinghaus-Werke GmbH**
**Kenkhauser Strasse 125**
**D-5632 Wermelskirchen(DE)**

(72) Erfinder: **Meiler, Udo**
**Paulusstrasse 52**
**D-5632 Wermelskirchen 1(DE)**

(74) Vertreter: **Mentzel, Norbert, Dipl.-Phys. et al,**
**Patentanwälte Dipl.-Phys. Buse Dipl.-Phys. Mentzel**
**Dipl.-Ing. Ludewig Unterdörnen 114**
**D-5600 Wuppertal 2(DE)**

(54) **Lamellenkupplung.**

(57) Bei einer Lamellenkupplung mit einem einerseits Außenlamellen 19 aufweisenden ersten Paket und einem Innenlamellen 18 besitzenden zweiten Paket kommen in der Überlappungszone Ringkörper 53, 60 zu liegen, die an ihren radial nach außen bzw. innen weisenden Zonen Durchbrüche für sie durchgreifende Bolzen 45 aufweisen, mit denen die Lamellen 18, 19 mittelbar bzw. unmittelbar an zugeordneten Maschinenteilen befestigt sind. Zwischen den einzelnen Lamellen 18 bzw. 19 eines Pakets befinden sich auf den gleichen Bolzen aufgefädelte Distanzstücke 46, die in ihrer Dicke 59 mit der Stärke 58 der Lamellen 18 des anderen Pakets gleich sind. Die Ringkörper 53, 60 der beiden Lamellen-Sorten 18, 19 sind mit nach außen bzw. innen weisenden Radialzungen 54, 63 versehen, die an ihren Endstücken 56, 65 die Durchbrüche 44 für die Bolzen 45 tragen. Die Ringkörper 60 wenigstens der einen Lamellensorte 19 sind in einzelne Segmente 61 gegliedert.

./...

EP 0 190 571 A2

FIG. 5

PATENTANWÄLTE
zugelassene Vertreter beim Europäischen Patentamt

0190571

DIPL.-PHYS. BUSE · DIPL.-PHYS. MENTZEL · DIPL.-ING. LUDEWIG
Unterdornen 114 · Postfach 20 02 10 · 5600 Wuppertal 2 · Telefon (0202) 55 70 22/23/24 · Telex 8591606 wpat · Telefax 0202/557024

– 1 –     5600 Wuppertal 2, den

Kennwort: "EP-Segmentlamelle"

Firma Ortlinghaus-Werke GmbH., Kenkhauser Straße 125,
5632 Wermelskirchen

---

Lamellenkupplung

---

Die Erfindung richtet sich auf eine Lamellenkupplung der
im Oberbegriff genannten Art.

Bei der bekannten Lamellenkupplung (DE-OS 33 09 104) sind
zwar die Innenlamellen durch einen Bolzen zu einem Lamellenpaket mit ihren Distanzstücken baueinheitlich zusammengefaßt, doch dienen diese Bolzen nicht zugleich zum Festspannen dieses zweiten Lamellenpakets an einem Maschinenteil. Es wird vielmehr die vorderste Einzellamelle im Bereich ihres Ringkörpers, der sich mit der Außenlamelle des
ersten Pakets überlappt, an einem stationären Bauteil befestigt, nämlich einem Stützring. Die am gegenüberliegenden
Ende des zweiten Lamellenpakets befindliche Einzellamelle
ist an einer Druckplatte befestigt, die unter Federbelastung steht und gegen diese durch Druckmittelsteuerung
axial beweglich ist. Bei dieser Kupplung sind die Zwischenstücke gegenüber der Lamellenstärke stets dicker
ausgebildet, damit bei Druckentlastung der Ringkörper
die Lamellen der beiden Pakete sich öffnen und eine
Entkupplung eintritt. Dazu wird die Druckplatte axial
bewegt und nimmt dadurch die daran befestigte äußere
Innenlamelle mit. Infolgedessen fächern sich die übrigen

2

Innenlamellen im Paket auf und geben die Ringkörper der
Außenlamellen des ersten Pakets frei. Es ist eine dynamische Schaltung zwischen der Lüftungs- und Kupplungsstellung vorgesehen; die äußerste Innenlamelle vollführt eine Zwangsbewegung mit der Druckplatte. Eine
entsprechende Spreizung ergibt sich auch bei der am
gegenüberliegenden Ende des zweiten Pakets befestigten
Innenlamelle. Das Lamellenmaterial wird wechselnden Belastungen ausgesetzt, wodurch sich eine Bruchgefahr ergibt.
Die Ringkörper der Innen- und Außenlamellen entstehen
durch segmentartige Rundschlitze in einer Ringplatte, weshalb, durch radiale Stege getrennt, ein weiterer Ringkörper in jeder Lamelle vorliegt, worin die Durchbrüche
für die Bolzen vorgesehen sind. Durch die Rundschlitze
tritt eine Schwächung der Ringplatte auf, ohne daß eine
ausreichende Flexibilität erreicht ist.

Der Erfindung liegt die Aufgabe zugrunde, eine einfache,
zuverlässige Lamellenkupplung der im Oberbegriff des
Anspruches 1 genannten Art zu entwickeln, die leicht zu
betätigen ist und schnell anspricht. Dies wird erfindungsgemäß durch die im Kennzeichen des Anspruches 1 angeführten Maßnahmen erreicht, denen folgende Bedeutung zukommt:

Die Radialzungen verbessern die Flexibilität der Lamellen,
ohne ihre Festigkeit zu beeinträchtigen, denn es liegt
auch im Bereich des die Innenlamellen bildenden zweiten
Pakets eine stabile Festspannung der Lamellen und ihrer
Distanzstücke an dem zugehörigen Maschinenteil vor. Unter
Einsparung von Material und Platz sind die Distanzstücke
bei der Erfindung in ihrer Dicke gleich der Lamellenstärke ausgebildet, wodurch sich die geringstmögliche Bauhöhe für die Lamellenkupplung ergibt. Die Radialzungen bilden nach innen bzw. außen vom Ringkörper ausgehende Strahlen, deren äußerste Strahlenenden am jeweiligen Maschinenteil fest eingespannt sind. Zur Erhöhung der Flexibilität werden die Ringkörper wenigstens einiger Lamellen in Segmente geteilt, die sich dann auch gegeneinander axial bewegen lassen. Dadurch ist es trotz der übereinstimmenden Stärke zwischen den Lamellen einerseits und den Distanzstücken andererseits möglich, bereits bei einer Druckentlastung ein gutes "Aufatmen" der Lamellen in den Paketen zu erreichen. Eine Zwangsbewegung von Lamellen ist nicht nötig.

Eine solche Lamellenkupplung kann sowohl als Bremse zwischen einem stationären und einem drehbaren Maschinenteil oder als Schaltkupplung zwischen zwei drehbaren Maschinenteilen verwendet werden. Bedeutungsvoll ist besonders eine stationäre Anwendung, wo ein drehbewegliches erstes Maschinenteil nur in eine andere Winkelstellung zum zweiten Maschinenteil gebracht wird und in dieser Position festgesetzt werden soll. Ein wichtiges Anwendungsgebiet ist der Bau von Robotern.

Aus funktionstechnischen Gründen empfiehlt es sich, alle Ringkörper des die Außenlamellen umfassenden Pakets in Segmente zu gliedern, während die Ringkörper der Innenlamellen im anderen Paket ungeteilt bleiben, wie Anspruch 2 vorschlägt. Es ergibt sich eine bequeme Herstellung und Montage sowie eine gute Flexibilität an der entscheidenden Stelle. Die Maßnahmen des Anspruches 3 gewähren eine zuverlässige und auch leichtgängige Verformbarkeit der Lamellen. Die Begrenzung der Segmentlängen auf zwei Radialzungen ist dabei besonders günstig. Die Abstandslücken nach Anspruch 4 erhöhen die Flexibilität. Aus Festigkeits-

4

gründen wird man, gemäß Anspruch 5, die Lücken zwischen den Segmenten nicht ausgerichtet anordnen, sondern zueinander versetzt, wobei die Anordnung gemäß Anspruch 6 besonders günstig ist.

In den Zeichnungen ist die Erfindung in zwei Ausführungsbeispielen dargestellt. Es zeigen:

Fig. 1 eine als Bremse ausgebildete erfindungsgemäße Lamellenkupplung im Längsschnitt, der entlang der Schnittlinie I-I von Fig. 2 genommen ist,

Fig. 2 eine Endansicht der in Fig. 1 gezeigten Lamellenkupplung in Blickrichtung von Pfeil II von Fig. 1,

Fig. 3 in Draufsicht eine in der Lamellenkupplung von Fig. 1 verwendete Außenlamelle,

Fig. 4 in entsprechendem Maßstab die Draufsicht auf die zugehörige Innenlamelle,

Fig. 5 in perspektivischer Explosionsdarstellung ein Teilstück von Lamellen der beiden zusammenwirkenden Pakete,

Fig. 6, in vergrößertem Maßstab und im Ausbruch, das die beiden Lamellenpakete umfassende Teilstück der Kupplung von Fig. 1, und

Fig. 7 ein zweites Ausführungsbeispiel der Lamellenkupplung, worin diese als Schaltkupplung zwischen zwei drehbeweglichen Maschinenteilen verwendet wird.

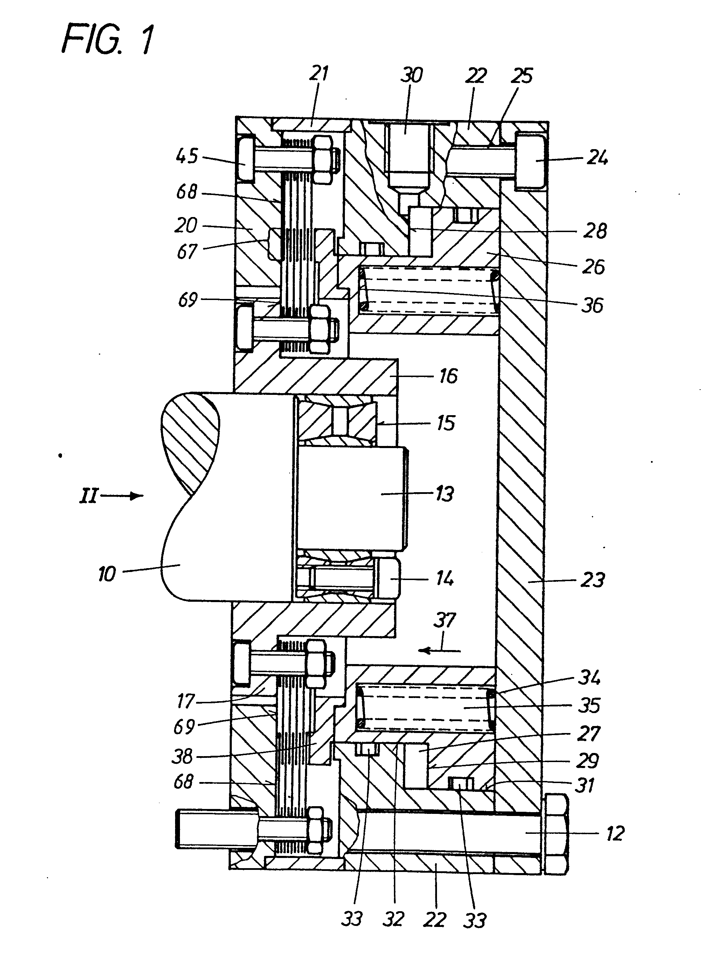

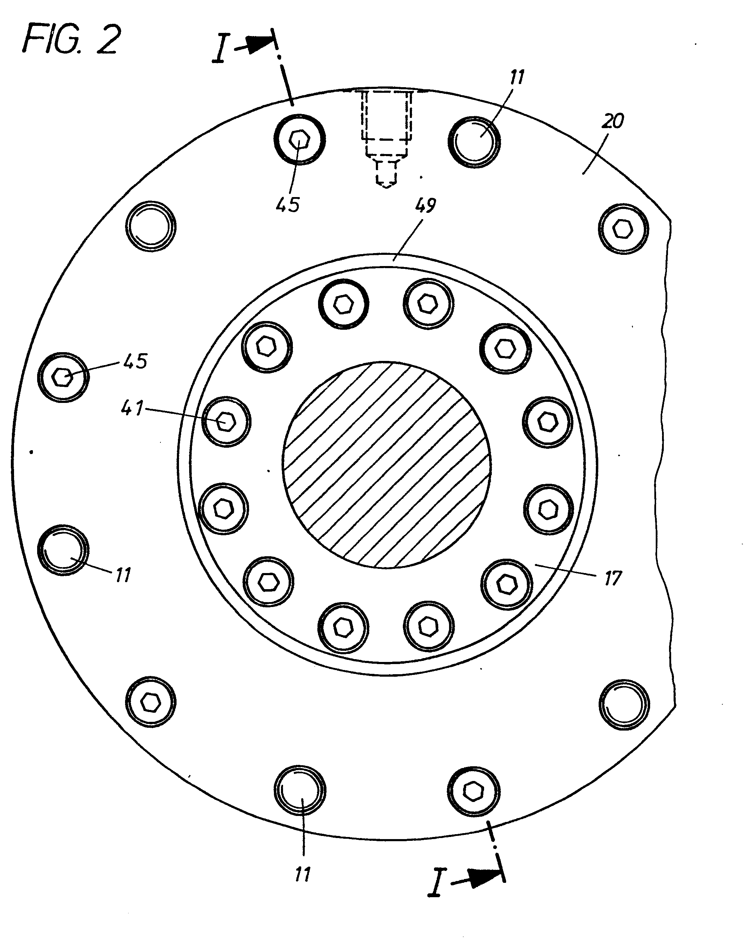

Bei der Lamellenkupplung gemäß Fig. 1 und 2 soll in der einen Schaltstellung die Drehung einer Welle 10 möglich und in der anderen Schaltstellung verhindert sein. Das Lamellengehäuse ist mit Durchbrüchen 11 versehen, worin Befestigungsschrauben 12 sitzen, die das Gehäuse mit einem stationären Maschinenteil verbinden. Die Welle 10 ist mit einem abgesetzten Ende 13 versehen, auf dem ein mit Schrauben 14 ausgerüsteter Klemmring 15 sitzt. Der Klemmring 15 dient zur kraftschlüssigen Verbindung der Welle 10 mit einer aufgesetzten Buchse 16, die einen mit der Welle 10 mitdrehbaren Flansch 17 trägt. Dieser Flansch 17 ist also der drehbare Maschinenteil der erfindungsgemäßen Kupplung.

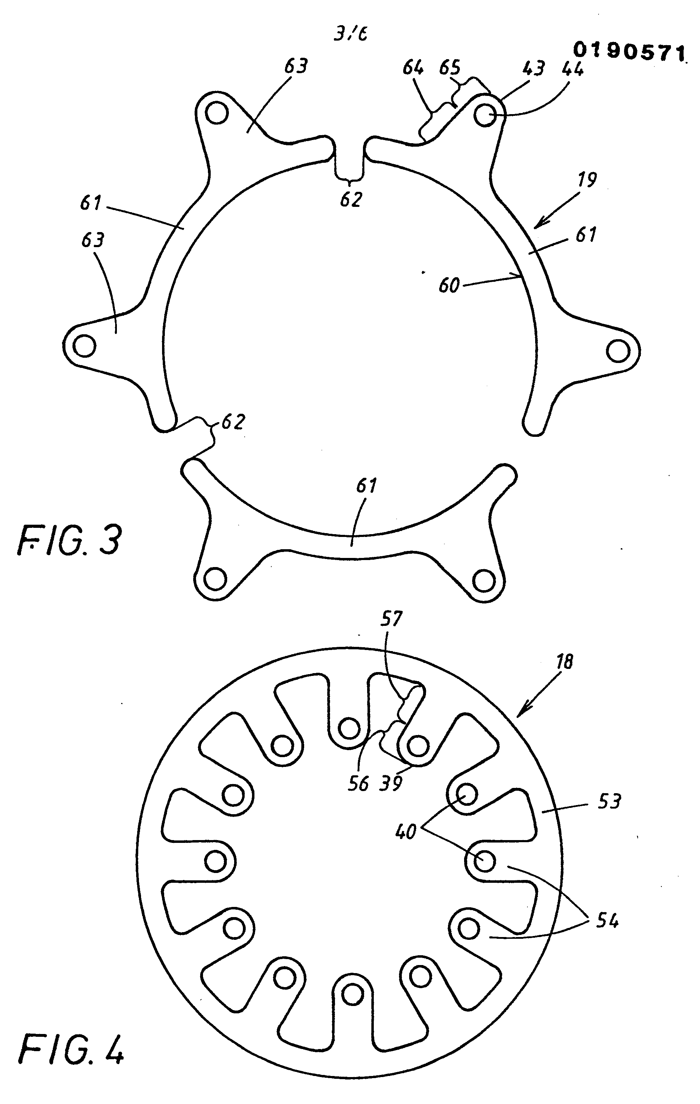

Die Lamellenkupplung besitzt zwei Lamellenpakete 68, 69, die im Bereich 67 einander überlappen. Das erste Paket 68 wird von Außenlamellen 19 gebildet, deren Aussehen aus Fig. 3 zu entnehmen ist, während das andere Paket 69 aus gemäß Fig. 4 gestalteten Innenlamellen zusammengesetzt ist. Diese Lamellen 18,19 haben folgendes Aussehen:

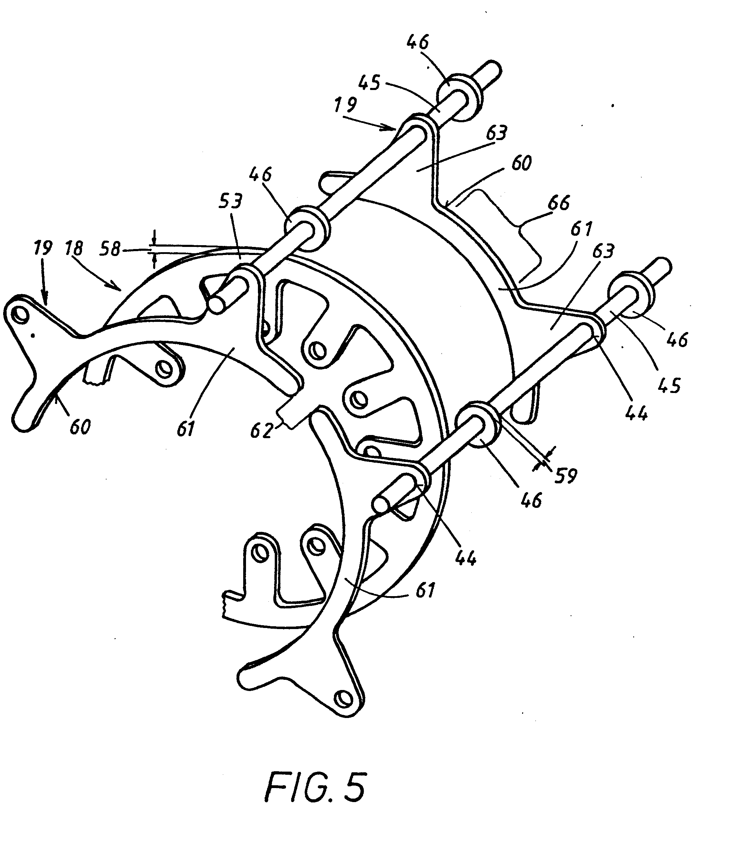

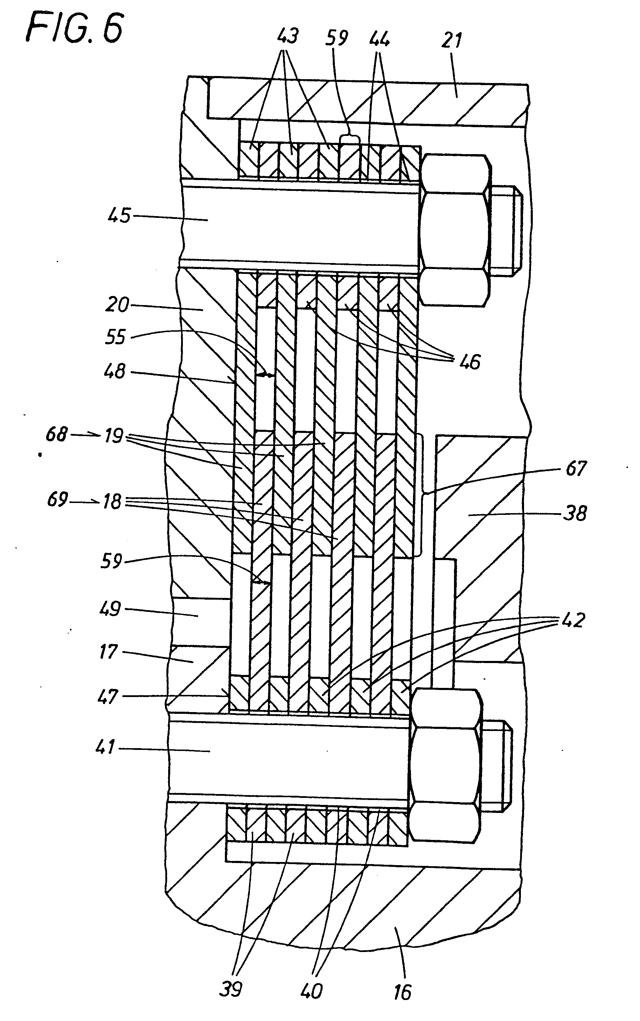

Die Innenlamellen 18 gemäß Fig. 4 sind erfindungsgemäß gegliedert in einen in sich geschlossenen, umlaufenden Ringkörper 53 mit einer Schar von Radialzungen 54, die in gleichmäßigem Abstand zueinander am Ringinnenrand sitzen. Die Zungenenden 39 tragen Durchbrüche 40, die, wie Fig. 6 verdeutlicht, zum Durchführen von Bolzen 41 dienen, mit denen sie an dem erwähnten Flansch 17 festgespannt werden. Auf den Bolzen 41 sitzen aber zugleich Distanzstücke 39, die hier, wie aus Fig. 5 hervorgeht, aus einfachen Unterlegscheiben bestehen. Diese Distanzstücke 39 kommen auf dem Zungenendstück 56 zu liegen, das allein beim Festziehen der Bolzen 41 eingespannt wird.

Zwischen dem Zungenendstück 36 und dem Radialkörper 53 verbleiben Zungenmittelstücke 57, die eine gute Flexibilität aufweisen. Die aus Fig. 5 ersichtliche Stärke 58 der Innenlamellen 18 ist gleich der Dicke 59 der zu dem anderen Lamellenpaket 69 gehörenden analogen Distanzstücken 46, die hier ebenfalls aus Unterlegscheiben bestehen. Beim Festspannen kommt das Lamellenpaket 69, wie Fig. 6 zeigt, an der inneren Anlagefläche 47 des Flansches 17 zu liegen.

Gemäß Fig. 3 bestehen zwar auch die Außenlamellen 19 aus einem Ringkörper 60, der aber aus mehreren Segmenten 61 sich zusammensetzt. Die Segmente 61 sind zweckmäßigerweise zueinander gleich ausgebildet und komplettieren sich im Montagezustand erst zu dem Ring. Zwischen der einander zugekehrten Endkanten der Segmente 61 befinden sich Abstandslücken 62, welche die Flexibilität erhöhen. Im vorliegenden Fall ist der Ringkörper 60 aus drei Segmenten 61 zusammengebaut, von denen jedes Segment 61 zwei am Außenumfang angeordnete Radialzungen 63 trägt, die sich vom Ringmittelpunkt strahlenförmig entfernen. In analoger Weise wie bei den Innenlamellen sind auch hier die Radialzungen 63 an ihren Zungenenden 43 mit Durchbrüchen 44 versehen, durch welche analoge Bolzen 45 hindurchgeführt werden, auf welche die bereits oben erwähnten Distanzstücke 46, im Wechsel mit dem Segment 61, jeweils aufgefädelt werden. Die Durchbrüche 44 kennzeichnen den Befestigungsbereich 65 dieser Radialzungen 63, an welchem sich auch hier jeweils ein flexibel bleibendes Zungen-Mittelstück 64 anschließt.

Fig. 5 zeigt den Montagefall, wo Segmente 61 benachbarter Außenlamellen 19 gemeinsam auf den Bolzen 45 aufgefädelt sind. Dabei ist erkennbar, daß die Segmentlücke 62 bei benachbarten Ringkörpern 60 versetzt angeordnet ist. Es
befindet sich eine Lücke 62 jeweils in Ausrichtung mit
dem zwischen den beiden Radialzungen liegenden Mittelteil
66 eines Elements 61 in der benachbarten Außenlamelle 19.
Im Montagefall liegen die Ringkörper 53, 60 beider Lamellenpakete 68, 69 überlappend zueinander. Die federnden
Radialzungen 63 bzw. 54 bilden einen von diesen Ringkörpern 53 bzw. 60 nach innen bzw. außen gerichteten
"Strahlenkranz". Die Überlappung der Ringkörper 60, 53
der beiden Lamellenpakete 68; 69 ist in Fig. 1 und 6
mit 67 bezeichnet.

Über ihren Bolzen 45 ist das Paket 68 der Außenlamellen 19,
wie Fig. 6 zeigt, an der Anlagefläche 48 einer Stützplatte
20 befestigt. Wie aus Fig. 1 hervorgeht, ist die Stützplatte 20 über ein Rohrstück 21 mit einem ringförmigen
Gehäuse 22 verbunden, das seinerseits rückseitig mit einer
Abschlußplatte 23 verschlossen ist. Die Befestigung der
Abschlußplatte 23 am Gehäuse 22 erfolgt mit Schrauben 24,
die in Gewindelöcher 25 des Gehäuses eingreifen. Die Gewindelöcher 25 mit ihren Schrauben 24 sind über den Randbereich der Abschlußplatte 23 gleichmäßig verteilt.

Das ringförmige Gehäuse 22 hat eine Abstufung, in welcher
ein ringförmiger Kolben 26 angeordnet ist und mit seiner
Ringschulter 29 einen Druckraum 27 gegenüber einer Ringschulter 28 des Gehäuses 22 einschließt. Über eine Bohrung
30, an welcher nicht näher dargestellte Druckmittelschläuche oder Druckmittelrohre anschließbar sind, wird das
Druckmittel in den Druckraum 27 eingeführt und bringt den
Kolben 26 in die aus Fig. 1 ersichtliche Grundstellung.
Zwecks Abdichtung des Druckraums 27 sind sowohl in der
äußeren Mantelfläche 31 des Kolbens 26 als auch in der inneren Mantelfläche 32 des Gehäuses 22 Nuten zur Aufnahme von Dichtungen 33 vorgesehen.

Im Kolben 26 sind in gleichmäßiger Verteilung Sackbohrungen 35 vorgesehen, in welchen wendelförmige Druckfedern 34 axial angeordnet sind, die sich einerends am Boden 36 der Sackbohrung 35 und anderends an der Abschlußplatte 23 abstützen und dabei unter Vorspannung stehen. Wird Druckmittel aus dem Druckraum 27 abgelassen, so wird der Kolben 26 aufgrund der Vorspannung seiner Druckfedern 34 in Richtung des Pfeils 37 von Fig. 1 verschoben. Vor dem vorderen Stirnende des Ringkolbens 26 befindet sich eine Druckplatte 38, die bei dieser Verschiebung auf die erwähnte Überlappung 67 der beiden Ringkörper 60, 53 der Lamellenpakete 68, 69 trifft und diese flächig gegeneinander preßt.Dadurch werden die drehenden Teile, nämlich die Welle 10 mit ihrem Flansch 17 und dem Lamellenpaket 69 gegenüber den stationären Teilen, nämlich dem festen Maschinenteil mit der Stützplatte 20 und dem ersten Lamellenpaket 68, festgelegt.Diese Bremsstellung wird, solange nicht wieder Druckmittel in den Druckraum 27 eingelassen wird, von den vorgespannten Axialfedern 34 fixiert. Wie aus Fig. 4 hervorgeht, ist die Dicke 59 der Distanzstücke 46 des ersten Pakets 68 mit der Stärke 58 der Innenlamellen 18 des zweiten Pakets 69 genau gleich, wie umgekehrt die Dicke der Distanzstücke 42 im zweiten Paket 69 der Stärke der Außenlamellen 19 im ersten Paket 68 gleich ist. Die Distanzstücke 43 bzw. 42 bestimmen den zugehörigen Lamellenabstand 55.

Wird Druckmittel in den Druckraum 27 eingeführt, so wird der ringförmige Kolben 26 gegen die Wirkung der vorgespannten Axialfedern 34 gegen die Richtung des Pfeils 27 axial verschoben, wodurch die Druckplatte 38 die beiden Lamellenpakete 68, 69 wieder frei gibt. Die Lamellen 18, 19 blättern von selbst wieder
auf. Die Welle 10 ist dadurch wieder zur Drehung freigegegeben.

Die Innen- und Außenlamellen 18, 19 bestehen aus blankem
Metall, insbesondere Stahl.        In einem bevorzugten
Anwendungsfall kommt die geschilderte Bremswirkung der
Kupplung an den beiden Lamellenpaketen 68, 69 bereits
bei Stillstand der Welle 10 zustande, um die betreffende
Lage der Welle 10 bezüglich des Maschinenteils zu sichern.
Die gegeneinander zur Anlage kommenden Seitenflächen der
Lamellen 18, 19 werden vorzugsweise mit einer dünnen
Schicht aus Molybdän beschichtet.

Wie aus der Endansicht von Fig. 2 hervorgeht, sind die
Bolzen 45 zum Festspannen des die Außenlamellen 19 tragenden ersten Pakets 68 im Wechsel mit den Gehäusedurchbrüchen 11 für die Befestigungsschrauben 12 in gleichmäßigem Abstand zueinander an der Stützplatte 20 angeordnet. Und zwar gibt es sechs Bolzen 45 für die aus
drei Segmenten 61 bestehenden Außenlamellen 19 von Fig. 3.
Durch einen Spalt 49 getrennt von der Stützplatte 20
befindet sich der Flansch 17, worin zwölf Bolzen 41 zum
Festspannen des anderen Pakets 69 in gleichmäßigem Abstand
zueinander angeordnet sind. Wie ersichtlich, sind für das
Paket der Innenlamellen 18 doppelt so viele Festspannstellen vorgesehen als für die Außenlamellen 19. Dies
berücksichtigt die unterschiedlichen Hebellängen und
optimiert die Bremswirkungen.

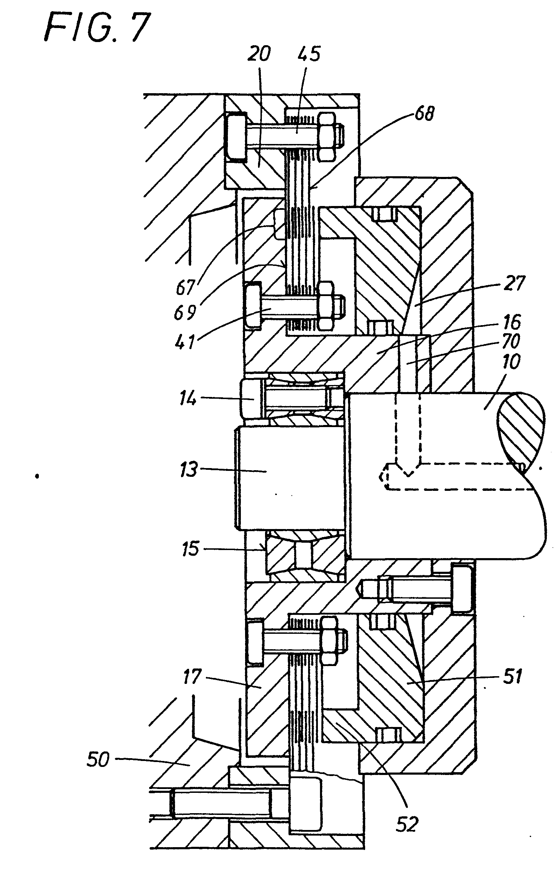

Bei dem in Fig. 7 dargestellten Ausführungsbeispiel ist
eine drehbare Welle 10 über die erfindungsgemäße Lamellenkupplung mit den genannten Lamellenpaketen 68, 69 mit einem ebenfalls drehfähigen Maschinenteil 50 kuppelbar.
Über eine Leitung 70 wird durch die Welle 10 in analoger
Weise zu einem Druckraum 27 Druckmittel geführt, das
einen Kolben 51 in analoger Weise axial bewegt und dabei
dessen rohrförmigen Ansatz 52 gegen die Überlappung 67
der beiden Pakete 68, 69 preßt. Hier wird folglich durch
das Druckmittel, im Gegensatz zum ersten Ausführungsbeispiel von Fig. 1, die Kupplung der beiden Lamellenpakete
68, 69 wirksam gesetzt. Die Rückstellung des Kolbens 51
in der Ausgangslage von Fig. 7 kann durch nicht näher
gezeigte axiale Federbelastung erfolgen. Es versteht sich,
daß statt der Druckmittelbetätigung auch eine Federbetätigung, wie im Falle der Fig. 1 hier angewendet werden
könnte, wie umgekehrt, bei Fig. 1, anstelle der Federbetätigung zum Wirksamsetzen der Kupplung eine Druckmittelbetätigung benutzt werden könnte.

Kennwort: "EP-Segmentlamelle"

Bezugszeichenliste:

10 Welle

11 Gehäusedurchbruch

12 Befestigungsschraube

13 abgesetztes Ende von 10

14 Schraube

15 Klemmring

16 Buchse

17 zweiter Maschinenteil, Flansch

18 Innenlamelle

19 Außenlamelle

20 erster Maschinenteil, Stützplatte

21 Rohrstück

22 Gehäuse

23 Abschlußplatte

24 Schraube

25 Gewindeloch

26 ringförmiger Kolben

27 Druckraum

28 Ringschulter an 22

29  Ringschulter an 26

30 Bohrung

31 äußere Mantelfläche von 26

32 innere Mantelfläche von 22

33 Dichtung

34 wendelförmige Druckfeder, Axialfeder

35 Sackbohrung

36 Boden von 35

37 Bewegungspfeil von 26

38 Druckplatte

39 Zungenende

40 Durchbruch in 39

12

41 verschraubbarer Bolzen

42 Distanzstück, Ringscheibe

43 Zungenende

44 Durchbruch

45 Bolzen

46 Distanzstück, Unterlegscheibe

47 Anlagefläche von 17

48 Anlagefläche von 20

49 Spalt

50 Maschinenteil

51 Druckkolben

52 rohrförmiger Ansatz von 51

53 Ringkörper von 18

54 Radialzunge von 18

55 Lamellenabstand

56 Zungenendstück, Befestigungsbereich

57 Zungenmittelstück von 18

58 Lamellenstärke von 18

59 Dicke der Unterlegscheibe

60 Ringkörper von 19

61 Segment von 60

62 Abstandslücke zwischen 61

63 Radialzunge

64 Zungenmittelstück von 63

65 Zungenendstück von 63, Befestigungsbereich

66 Mittelteil von 61

67 Überlappung von 53, 60

68 erstes Lamellenpaket mit 19

69 zweites Lamellenpaket mit 18

70 Druckmittelleitung (Fig. 7)

Kennwort: "EP-Segmentlamelle"

P a t e n t a n s p r ü c h e

1.) Lamellenkupplung, umfassend ein erstes Lamellenpaket
(68) mit Außenlamellen (19) und ein zweites Lamellenpaket (69) mit Innenlamellen,

deren einander überlappende (67) inneren und äußeren
Radialzonen jeweils Ringkörper (53;60) sind, lamellenweise, von Paket (68) zu Paket (69) wechselnd,
kämmend ineinandergreifen und zwischen einer axial
festen Stützplatte (20) einerseits und einer gegen
eine Axialfederung (34) davon wegbewegbaren Druckplatte (38) andererseits angeordnet sind,

die Außenlamellen (19) in ihrer äußeren Radialzone (65)
und die Innenlamellen (18) in ihrer inneren Radialzone
(56) fluchtende Durchbrüche (44,40) für sie paketweise durchgreifende Bolzen (45;41) aufweisen,

auf den Bolzen (45;41) jeweils zwischen zwei benachbarten Lamellen (19;19 bzw. 18;18) eines Pakets (68,69)
Distanzstücke (46;42 zur Festlegung eines definierten
Lamellenabstands (55) angeordnet sind,

die Außenlamellen (19) und die Distanzstücke (46) des
ersten Lamellenpakets (68) mit ihren Bolzen (45) gemeinsam an einem ersten drehbaren bzw. stationären Maschinenteil (20) festgespannt sind, während Innenlamellen (18) des zweiten Lamellenpakets
(69) an einem zweiten stationären bzw. drehbaren Maschinenteil (17) befestigt sind,

d a d u r c h   g e k e n n z e i c h n e t,

daß die Außen- und Innenlamellen (19;18) an ihren
Ringkörpern (60,53) nach außen bzw. innen weisende
Radialzungen (63;54) besitzen und die Durchbrüche (44;
40) für die Bolzen (45;41) sich jeweils in den Zungenendstücken (65;56) befinden,

der Ringkörper (60) wenigstens einiger Lamellen (19)
in Segmente (61) geteilt ist,

die Innenlamellen (18) und Distanzstücke (42) des
zweiten Lamellenpakets (69) durch die sie durchgreifenden Bolzen (41) an dem zweiten Maschinenteil (17)
festgespannt sind

und die Dicke (59) der Distanzstücke (46;42) des
einen Lamellenpakets (68;69) jeweils der Stärke der
Lamellen (18,19) des anderen Pakets (69;68) gleich
ist.

2.) Lamellenkupplung  nach Anspruch 1, dadurch gekennzeichnet,

daß alle Ringkörper (60) der Lamellen (19) in einem
Paket (68), insbesondere diejenigen des die Außenlamellen aufweisenden ersten Lamellenpakets, aus Segmenten (61) bestehen und nur die Ringkörper (53) der Lamellen (18) des anderen Pakets (69), insbesondere diejenigen des die Innenlamellen aufweisenden zweiten Lamellenpakets, einteilig sind.

3.) Lamellenkupplung nach Anspruch 1 oder 2, dadurch gekennzeichnet, daß jedes Segment (61) mindestens zwei Radialzungen (63) mit endseitigen Durchbrüchen (44) für die Bolzen (45) trägt.

4.) Lamellenkupplung nach einem oder mehreren der Ansprüche 1 bis 3, dadurch gekennzeichnet, daß zwischen den Endkanten angrenzender Segmente (61) eines Lamellen-Ringkörpers (60) freie Abstandslücken (62) angeordnet sind.

5.) Lamellenkupplung nach Anspruch 4, dadurch gekennzeichnet, daß die Abstandslücken (62) zwischen den Segmenten (61) benachbarter Lamellen-Ringkörper (60) in einem Lamellenpaket zueinander drehversetzt angeordnet sind.

6.) Lamellenkupplung nach Anspruch 5, dadurch gekennzeichnet, daß die Lücke (62) zwischen den Segmenten (61) eines Ringkörpers (60) mit dem Mittelteil (66) des Segments (61) der benachbarten Lamelle (19) axial ausgerichtet ist.

# FIG. 1

Ortlinghaus -Werke GmbH

FIG. 2

Ortlinghaus-Werke GmbH

**FIG. 3**

**FIG. 4**

Ortlinghaus

FIG. 5

Ortlinghaus

FIG.6

Ortlinghaus-Werke GmbH

0190571

FIG. 7

Ortlinghaus - Werke GmbH